# EUROPÄISCHE PATENTSCHRIFT

(11) **EP 1 772 050 B1**
(45) Veröffentlichungstag und Bekanntmachung des Hinweises auf die Patenterteilung: **31.03.2010**
(21) Anmeldenummer: 06018631.9
(22) Anmeldetag: 06.09.2006
(51) Int. Cl.: A01D 33/14, A01D 27/04

(54) **Rodeaggregat sowie Erntemaschine mit einem solchen Aggregat**
Lifting assembly and harvesting machine comprising such a lifting assembly
Ensemble d'arrachage et machine de récolte avec un tel ensemble d'arrachage

(30) Priorität: 07.10.2005 DE 102005048470; 21.10.2005 DE 102005050491
(43) Veröffentlichungstag der Anmeldung: 11.04.2007
(73) Patentinhaber: Holmer Maschinenbau GmbH, 84069 Eggmühl (DE)
(72) Erfinder: Stöckl, Hubert, 93326 Offenstetten (DE)
(74) Vertreter: Graf, Helmut

(56) Entgegenhaltungen:
- BE-A1- 897 154
- DE-A1- 4 035 570
- DE-U1- 8 525 121
- DE-U1- 29 601 596
- FR-A1- 2 800 233

## Beschreibung

Die Erfindung bezieht sich auf ein Rodeaggregat gemäß Oberbegriff Patentanspruch 1 sowie auf eine Erntemaschine gemäß Oberbegriff 11.

Ein Rodeaggregat der gattungsmäßigen Art ist bekannt (DE-U 296 01 596). Bei dem bekannten Rodeaggregat sind an einem sich am Boden über Stützräder abstützenden Rahmen sowohl das Schlegelaggregat als auch die Rodeeinrichtung schwenkbar befestigt. Nachteilig ist u.a., dass das Gewicht u.a. des Schlegelaggregates vollständig von den Stützrädern aufgenommen werden muss.

Bekannt ist weiterhin ein Rodeaggregat (FR-A2 800 233 A1), bei dem an einem gemeinsamen Rahmenelement ein Regelaggregat sowie eine Rodeeinrichtung vorgesehen sind. Das Rahmenelement ist höhenverstellbar an einem Ausieger an der Fronseite einer Erntemaschine gehalten. Eine Tastradanordnung zur Einstellung der Rodetiefe ist nicht vorgesehen.

Aufgabe der Erfindung ist es, ein Rodeaggregat aufzuzeigen, welches sich durch eine optimierte Steuerung oder Regelung der Rodetiefe sowie auch durch eine optimale Steuerung oder Regelung der Höhenlage des beim Roden vorauseilenden Schlegleraggregats auszeichnet, und zwar bei einfacher, betriebssicherer Konstruktion.

Zur Lösung dieser Aufgabe ist ein Rodeaggregat entsprechend dem Patentanspruch 1 ausgebildet. Eine Erntemaschine ist Gegenstand des Patentanspruches 11.

Das erfindungsgemäße Rodeaggregat ist für ein mehrreihiges Roden von Wurzelfrüchten, insbesondere Zuckerrüben ausgebildet und hierfür an der Frontseite der selbstfahrenden Erntemaschine vorgesehen. Die Erntemaschine ist dabei bevorzugt ein Vollernter, d.h. eine selbstfahrende Erntemaschine, die auf ihrem Fahrzeugrahmen u.a. auch Reinigungsorgane oder stecken für das Erntegut, einen Bunker für das Erntegut usw. aufweist.

Bei dem erfindungsgemäßen Rodeaggregat ist die Rodetiefe einstellbar und der jeweiligen Finstellung entsprechend exakt regelbar, sodass der beim Roden bewegte und/oder mitgeführte Bodenanteil gering gehalten werden kann und somit ein Roden bei optimalem Energieverbrauch möglich ist.

In Weiterbildung der Erfindung weist das Rodeaggregat beispielsweise die nachstehenden Merkmale auf, die jeweils für sich oder in beliebiger Kombination vorhanden sei können, nämlich
dass über die Tastradanordnung die Steuerung der Rodetiefe durch Regelung in einem geschlossenen Regelkreis, vorzugsweise hydraulischen Regelkreis erfolgt,
und/oder
dass über die Trastradanordnung die Steuerung der Höhenlage des Schlegleraggregats durch Regelung in einem geschlossenen Regelkreis, vorzugsweise hydraulischen Regelkreis erfolgt,
und/oder
dass zur Änderung der zu steuernden Höhenlage des Schlegleraggregats die Abstützeinrichtung ein verstellbares Abstützelement vorzugsweise in Form eines Hydraulikzylinders aufweist,
und/oder
dass wenigstens ein hydraulisches Ventilelement vorgesehen ist, welches über wenigstens eine Stelleinrichtung in Abhängigkeit von der Änderung des Abstandes zwischen der Tastradanordnung oder der Achse des wenigstens einen Tastrades und einem die Rodeelemente aufweisenden Träger oder Rahmen betätigt wird,
und/oder
dass wenigstens ein hydraulisches Ventilelement vorgesehen ist, welches über wenigstens eine Stelleinrichtung in Abhängigkeit von der Änderung de Abstandes zwischen der Tastradanordnung oder der Achse des wenigstens einen Tastrades und einem Bezugspunkt am Schlegleraggregat betätigt wird,
und/oder
das die zu steuernde Rodetiefe und/oder Höhenlage des Schlegleraggregats an der Stelleinrichtung einstellbar ist,
und/oder
dass die Stelleinrichtung ein verstellbares Element, vorzugsweise einen in seiner wirksamen Länge verstellbaren, beispielsweise von einem Hydraulikzylinder gebildeten Stößel aufweist,
und/oder
dass die Stelleinrichtung von einem mit der Tastradanordnung oder mit einem Lager dieser Anordnung an einem Ende gelenkig verbundenen Stößel oder Abstützelement und von einem mit dem anderen Ende des Stößel- oder Abstützelementes gelenkig verbundenen Schwenkhebel gebildet ist, der an einem die Rodeeinrichtung tragenden Rahmenelement oder an dem Schlegleraggregat gegen die Wirkung einer Feder (26) schwenkbar vorgesehen ist,
und/oder
das durch Mittel zur Begrenzung des Schwenkwinkels des Schwenkhebels vorgesehen sind,
und/oder
dass der in seiner Länge einstellbare Stößel, der Schwenkhebel sowie die mit dem Hebel zusammenwirkende Feder eine gefederte Abstützung für die Tastradanordnung bilden,
und/oder
dass die federnde Abstützung an beiden Längsseiten des Rodeaggregates vorgesehen ist,
und/oder
das die Tastradanordnung für einen Bewegungs- oder Steuerhub in vertikaler Richtung an einem Rahmenelement federnd abgestützt ist,
und/oder
dass die wenigstens eine Ventileinrichtung in Abhängigkeit von diesem Steuerhub betätigbar ist,
und/oder
dass das Feder- und/oder Betätigungselement von wenigstens einem Hydraulikzylinder gebildet ist und/oder
dass die Tastradanordnung in einer radialen Achsrichtung, die eine horizontale und vertikale Komponente enthält, beweglich gelagert ist

Weiterbildungen der Erfindung sind Gegenstand der Unteransprüche. Die Erfindung wird im Folgenden anhand der Figuren an einem Ausführungsbeispiel näher erläutert.

Es zeigen:
- Fig. 1: in schematischer Darstellung und in Seitenansicht ein Rodeaggregat zum mehrreihigen Roden von Hackfrüchten, insbesondere Zuckerrüben aus der Gare, zusammen mit einer Teildarstellung einer Erntemaschine, z.B. Zuckerrübenvollernter;
- Fig. 2: in vergrößerter Detaildarstellung eine Ventilsteuerung zur Regelung der Höheneinstellung des Rodeaggregates bzw. der Rodetiefe.

In den Figuren ist 1 ein Rodeaggregat, welches in üblicher Weise an der Frontseite einer in dieser Figur nur angedeuteten selbstfahrenden Erntemaschine 2 zum Ernten bzw. Roden von Wurzelfrüchten, insbesondere Zuckerrüben 3 vorgesehen ist, und zwar über eine mehrere parallele Ausleger aufweisende Auslegeanordnung 4. Diese ist ihrerseits über eine mehrere Lenker aufweisende Lenkeranordnung 5 und wenigstens einen hydraulischen Stellzylinder 6 höhenverstellbar an der Forderseite der Erntemaschine 2 gehalten ist, wie dies mit dem Doppelpfeil A angedeutet ist. Der wenigstens eine Stellzylinder 6 dient somit zum Anheben und Absenken des Rodeaggregates 1, aber auch zur Einstellung und Regelung der Rodetiefe.

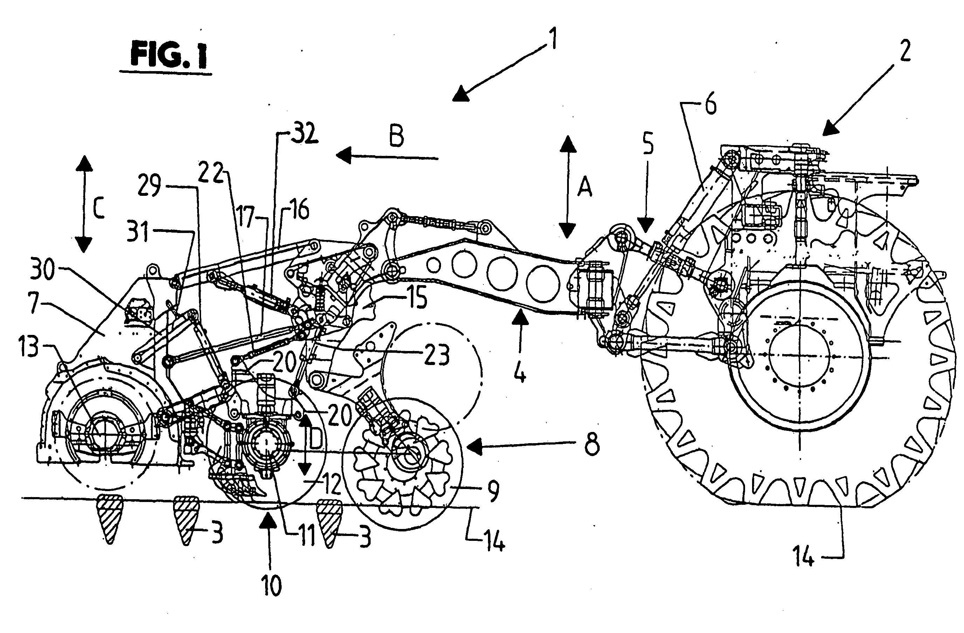

Das Rodeaggregat 1 umfasst u.a. eine Einrichtung zum Entfernen von Kraut, d.h. ein Schlegleraggregat 7, welches insbesondere zum Entfernen von Kraut beispielsweise die bei Hackfruchterntemaschinen übliche Ausbildung aufweist, eine Rodeeinrichtung 8, die bei der dargestellten Ausführungsform in bekannter Weise aus mehreren, jeweils paarweise angeordneten scheibenartigen Rodeelementen 9 besteht und bei der jeweils ein Paar von Rodeelementen 9 für eine zu rodende Reihe vorgesehen ist und sämtliche scheibenartigen Rodeelemente 9 bei der dargestellten Ausführungsform in der für die Figur 1 gewählten Darstellung hintereinander angeordnet sind, sowie eine Tastradanordnung 10, die bei der dargestellten Ausführungsform, mehrere, auf einer gemeinsamen Welle 11 angeordnete Tasträder 12 aufweist. Die Welle 11 ist ebenso, wie die Welle 13 des Schlegleraggregates 7 beim Roden senkrecht zur Fahrtrichtung B beim Roden und horizontal oder im Wesentlichen horizontal orientiert.

Wie die Figur 1 weiterhin zeigt, bildet das Schlegleraggregat 7 bezogen auf die Fahrtrichtung B das vordere Ende des Rodeaggregates 1. Die Tastrolleneinrichtung 10 befindet sich zwischen dem Schlegleraggregat 7 und der Rodeeinrichtung 8. Das Schlegleraggregat 7 bzw. dessen Welle 13, die Rodeelemente 9 sowie auch die Tasträder 12 bzw. deren Welle 11 sind angetrieben, und zwar z.B. jeweils über nicht dargestellte Hydraulik-Motoren. Der Antrieb für die beim Roden auf dem Boden 14 aufstehenden und das Niveau des Bodens 14 abtastenden Tasträder 12 ist dabei bevorzugt so ausgeführt, dass diese Tasträder sich beim Roden mit einer bezogen auf die Fahrgeschwindigkeit der Erntemaschine 2 etwas größeren Geschwindigkeit drehen, um hierdurch einen Schlupf und damit einen Selbstreinigungseffekt für die Tasträder 12 zu erreichen, d.h. ein Anhaften von Bodenmaterial an den Tasträdern 12 zu vermeiden. Über die Tasträderanordnung 10 erfolgt in der nachstehend noch näher beschriebenen Weise die Regelung der Rodetiefe in einem geschlossenen Regelkreis sowie auch die Höheneinstellung des Schlegleraggregats 7.

Im Einzelnen umfasst das Rodeaggregat 1 ein ein- oder mehrteiliges zentrales Rahmenelement 15, welches mit dem der Erntemaschine 2 entfernt liegenden Ende der Auslegeranordnung 4 verbunden ist und an welchem u.a. die Rodeeinrichtung 8 mit ihren Rodeelementen 9 gehalten ist. An diesem Rahmenelement 15 ist über mehrere, Gelenkvierecke bildende Lenker 16 und 17 das Schlegleraggregat 7 gehalten, und zwar derart, dass es u.a. relativ zum Rahmenelement 15 in vertikaler Richtung angehoben und abgesenkt werden kann, wie dies in der Figur 1 mit dem Doppelpfeil C angedeutet ist. Es versteht sich, dass die Lenker 16 und 17 jeweils zumindest paarweise vorgesehen sind, und zwar jeweils ein Lenker 16 bzw. 17 zumindest an jeder Längsseite des Rodeaggregates 1.

Die Tastrollenanordnung 10 ist für die Steuerung oder Regelung der Rodetiefe insbesondere auch in vertikaler Richtung oder im Wesentlichen in vertikaler Richtung mit einem kleinen Steuerhub gefedert relativ zum Rahmenelement 15 beweglich, wie dies mit dem Doppelpfeil D angedeutet ist. Hierfür ist die Welle 11 zumindest an ihren beiden Enden, d.h. an den beiden Längsseiten des Rodeaggregates 1 wenigstens höhenbeweglich gelagert, und zwar jeweils an einem Lagerelement 20. An diesen Lagerelementen 20 sind dann auch die hydraulischen Antriebe für die Welle 11 vorgesehen. Weiterhin sind die Lagerelemente jeweils über einen Lenker 21 gelenkig mit dem Schlegleraggregat 7 und mit einem weiteren Lenker 22 gelenkig mit dem Rahmenelement 15 verbunden, sodass einerseits die Hubbewegung der Tastradanordnung 10 relativ zum Rahmenelement 15 entsprechend dem Pfeil D möglich ist, andererseits aber auch die beim Umlaufen der Tasträder 12 auftretenden Drehmomente zuverlässig insbesondere auf das Rahmenelement 15 übertragen werden.

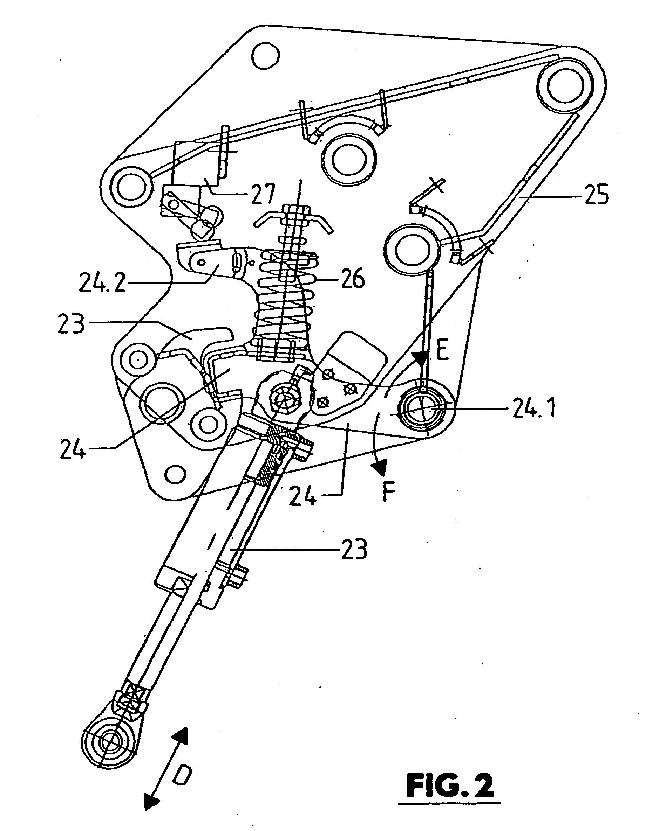

Die Lagerelemente 20 an einer Längsseite des Rodeaggregates 1 stützen sich jeweils über einen Hydraulikzylinder 23 ab, der an einem Ende gelenkig mit dem Lagerelement 20 und am anderen Ende gelenkig mit einem Schwenk- oder Steuerhebel 24 verbunden ist, der an einem Ende um eine senkrecht zur Fahrtrichtung B orientierte horizontale oder nahezu horizontale Achse 24.1 schwenkbar an einer mit dem Rahmenelement 15 verbundenen Platine 25 gehalten ist und mit seiner Längserstreckung in einer Achsrichtung parallel oder im Wesentlichen parallel zur Fahrtrichtung B orientiert ist. Dort, wo der Hydraulikzylinder 23 an dem Schwenk- oder Steuerhebel 24 angelenkt ist, stützt sich dieser Hebel gegen eine Druckfeder 26 ab, die den Schwenkhebel 24 in seine in der Figur 2 untere Schwenkstellung vorspannt, über den Hydraulikzylinder 23 eine gefederte Abstützung für das Lagerelement 20 bewirkt und beim Bewegen der Tastradanordnung 10 in Richtung der oberen Stellung ihres Steuerhubes D durch über den Hydraulikzylinder 23 ausgeübte Druckkräfte unter Schwenken des Steuerhebels 24 gespannt wird. Der Hydraulikzylinder 23 dient als in der Länge stufenlos einstellbarer Stößel für die Einstellung der Rodetiefe.

Eine Verlängerung 24.2 des Steuerhebels 24 wirkt mit einem Hydraulik-Ventil 27 zusammen, welche Teil eines hydraulischen Steuer- und Regelkreises ist, welcher auch den Stellzylinder 6 einschließt. Beim Roden bewirkt das den Stellzylinder 6 steuernde Ventil 27 jeweils ein Anheben der Auslegeranordnung 4 und damit des Rodeaggregates 1 durch den Steuerzylinder 6, wenn bei einem Anheben der Tastradanordnung 10 der Steuerhebel 24 um sein Gelenk 24.1 gegen die Druckfeder 26 bei der für die Figur 2 gewählten Darstellung im Uhrzeigersinn, d.h. in Richtung des Pfeils E geschwenkt wird. Umgekehrt bewirkt das Ventil 27 über den Stellzylinder 6 ein Absenken der Auslegeranordnung 4 und damit des Rodeaggregates 1, wenn durch Absenken der Tastradanordnung 10 der Steuerhebel 24 im Gegenuhrzeigersinn, d.h. in Richtung des Pfeils F geschwenkt wird. Das Steuerventil 27 ist weiterhin so ausgebildet, dass zwischen den beiden extremen Schwenkstellungen der Stellzylinder 6 in seiner jeweiligen Stellung hydraulisch fixiert ist. Die beiden Schwenkstellungen des Steuerhebels 24 sind durch eine an der Platine 25 vorgesehene und Anschläge für den Steuerhebel 24 bildende Kulisse 28 begrenzt.

Mit der Kulisse 28 ist auch der Bewegungshub begrenzt, mit dem die Tastradanordnung 10 für die Regelung der Rodetiefe relativ zu dem Rahmenelement 15 beweglich ist.

Die Einstellung der Rodetiefe erfolgt durch Betätigung bzw. Verstellen des doppelt wirkenden Hydraulikzylinders 23, d.h. durch Änderung des Abstandes zwischen dem Anlenkpunkt dieses Zylinders an dem Lagerelement 20 bzw. am Steuerhebel 24 und damit durch Änderung der effektiven Länge des von dem Hydraulikzylinder 23 gebildeten Abstützelementes, d.h. zur Vergrößerung der Rodetiefe wird die wirksame Länge des von dem Hydraulikzylinder 23 gebildeten Betätigungsstößels verkleinert und zur Reduzierung der Rodetiefe vergrößert. Nach der jeweiligen Einstellung wird der Hydraulikzylinder 23 hydraulisch blockiert, sodass er dann das starre Abstützelement für die gefederte Abstützung der Tastradanordnung 10 bildet und die Regelung der Rodetiefe mit der jeweiligen Einstellung erfolgt.

An beiden Längsseiten des Rodeaggregates 1 ist jeweils eine derartige Abstützung das Lagerelement 20 bestehend aus dem Hydraulikzylinder 23 und aus dem mit der Druckfeder 26 belasteten Schwenkhebel 24 vorgesehen, wobei aber nur an einer Längsseite des Rodeaggregates 1 das mit der Verlängerung 24.2 zusammenwirkende Steuerventil 27 vorhanden ist.

Eine weitere Besonderheit des Rodeaggregates 1 besteht darin, dass die Höheneinstellung (Doppelpfeil C) des Schlegleraggregates 7 in Bezug auf das Niveau des Bodens 14 ebenfalls durch die Tastradanordnung 10 erfolgt, und zwar dadurch, dass sich die Schlegleranordnung 7 auf der Tastradanordnung 10 bzw. auf deren Lagerelementen 20 abstützt. Hierfür sind an den beiden Längsseiten des Rodeaggregates 1 jeweils ein doppelt wirkender Hydraulikzylinder 29 vorgesehen, der an einem in der Figur 1 unteren Ende gelenkig mit dem jeweiligen Lagerelement 20 verbunden und an dem in der Figur 1 oberen Ende an einem Ende eines Lenkers 30 angelenkt ist, der seinerseits mit seinem anderen Ende am Schlegleraggregat bzw. am Rahmen dieses Aggregates gelenkig gelagert ist. Bei dem in der Figur 1 dargestellten Rodezustand des Rodeaggregates 1 schließen der Hydraulikzylinder 29 und der Lenker 30 einen Winkel von etwas weniger als 90° miteinander ein, der sich zur Unterseite des Rodeaggregates bzw. zum Boden 14 hin öffnet. In der Nähe des Gelenks zwischen Lenker 30 und Hydraulikzylinder 29 stützt sich das Schlegleraggregat 7 über einstellbare Anschläge 31 an der der Unterseite des Rodeaggregates 1 abgewandten Oberseite des Lenkers 30 und damit über die Hydraulikzylinder 29, die wiederum in ihrer Länge verstellbare Lenker oder Abstützelemente bilden, an der Tastradanordnung 10 ab. Durch Betätigen der Hydraulikzylinder 29 kann das Schlegleraggregat 7 für eine Änderung der Höheneinstellung angehoben und abgesenkt werden, wobei nach jeder Verstellung die Hydraulikzylinder 29 wiederum hydraulisch blockiert werden.

Um die Tastradanordnung 10 von dem relativ hohen Gewicht des Schlegleraggregates 7 zu entlasten, sind Hydraulikzylinder 32 vorgesehen, die zwischen dem jeweiligen oberen Lenker 16 und dem Rahmenelement 15 wirken. Die hydraulische Ansteuerung der Hydraulikzylinder 32 ist so ausgebildet, dass diese während des normalen Rodebetriebes im Wesentlichen nur als das Gewicht des Schlegleraggregates 7 zumindest teilweise aufnehmende und damit die Tastradanordnung 10 entlastende hydraulische Federelemente wirken. Hierfür sind in den hydraulischen Verbindungen zu den Hydraulikzylindern 32 hydraulische Puffer- oder Federelemente vorgesehen. Weiterhin sind die Hydraulikzylinder 32 auch so steuerbar, dass über sie ein separates Anheben des Schlegleraggregates 7 beispielsweise zum Ausweichen von Hindernissen möglich ist.

Die Schwenkachsen sämtlicher Lenker 16, 17, 18, 19, 21, 22, 30 sowie die Achsen sämtlicher Gelenkverbindungen der Hydraulik-Zylinder 23, 29 sind jeweils parallel zueinander sowie in horizontaler oder annähernd horizontaler Richtung und senkrecht zur Fahrrichtung B orientiert.

Eine Besonderheit des Rodeaggregates 1 besteht somit darin, dass über die Tastradanordnung 10 einerseits eine Einstellung und auch eine Regelung der Rodetiefe in einem geschlossenen Regelkreis erfolgt sowie zugleich auch eine Einstellung und Steuerung der Höhenlage des Schlegleraggregates 7 im Bezug auf das Niveau des Bodens 14, und zwar bei weiteren Funktionen wie u.a. das Entlasten der Tastradanordnung 10 vom Gewicht des Schlegleraggregates 7, die Möglichkeit eines schnellen separaten Anhebens des Schlegleraggregates 7 zum Ausweichen von Hindernissen sowie auch das Anhebens und Absenken des gesamten Rodeaggregates über den oder die Stellzylinder 6.

Die Erfindung wurde voranstehend an einem Ausführungsbeispiel beschrieben. Es versteht sich, dass zahlreiche Änderungen oder Abwandlungen möglich sind, ohne dass dadurch der die Erfindung tragende Gedanke verlassen wird. So ist es beispielsweise auch möglich, die Höhensteuerung des Schlegleraggregates 7 durch eine Regelung in einem geschlossenen Regelkreis durchzuführen, und zwar in ähnlicher Weise wie dies vorstehend für die Steuerung und Regelung der Rodetiefe beschrieben wurde, d.h. über wenigstens ein, vorzugsweise in seiner Länge verstellbares Abstützelement, das z.B. wiederum von einem doppelt wirkenden Hydraulikzylinder gebildet ist und zwischen der Tastradanordnung 10 bzw. dem dortigen Lagerelement 20 und einem Stellglied am Schlegleraggregat 7 wirkt, über welches dann eine Hydraulikventilanordnung betätigt wird.

Weiterhin kann selbstverständlich die Betätigung der jeweiligen hydraulischen Ventilanordnung zur Regelung der Rodetiefe und/oder zur Regelung der Höheneinstellung des Schlegleraggregates 7 auch anders ausgeführt sein, als dies im Zusammenhang mit der Figur 2 beschrieben wurde.

### Bezugszeichenliste

- 1: Rodeaggregat
- 2: Erntemaschine
- 3: Zuckerrübe
- 4: Auslegeanordnung
- 5: Lenkeranordnung
- 6: Stellzylinder
- 7: Schlegleraggregat
- 8: Rodeeinrichtung
- 9: Rodeelement
- 10: Tastradanordnung
- 11: Welle
- 12: Tastrad
- 13: Welle
- 14: Boden oder Untergrund
- 15: Rahmenelement
- 16, 17: Lenker
- 20: Lagerelement
- 21, 22: Lenker
- 23: Hydraulikzylinder
- 24: Schwenk- oder Steuerhebel
- 24.1: Lager
- 24.2: Verlängerung
- 25: Platine
- 26: Druckfeder
- 27: Hydraulikventil
- 28: Kulisse
- 29: Hydraulikzylinder
- 30: Lenker
- 31: Anschlag
- 32: Hydraulikzylinder

- A: Anheben und Absenken der Auslegeranordnung
- B: Farb- bzw. Roderichtung
- C: Höhenverstellung des Schlegleraggregates
- D: Hub der Tastradanordnung
- E, F: Schwenkbewegung des Steuerhebels

## Patentansprüche

1. Rodeaggregat für Erntemaschinen, insbesondere für selbstfahrende Erntemaschinen oder Vollernter zum Roden von Wurzelfrüchten, insbesondere Zuckerrüben (3) mit einem Schlegleraggregat (7), mit einer Rodeelemente (9) aufweisenden Rodeeinrichtung (8) an einem Rahmenelement (15) des Rodeaggregats sowie mit einer Tastradanordnung (10) mit wenigstens einem sich beim Roden auf den Boden abstützen Tastrad (12) zur Steuerung der Rodetiefe durch Änderung der Höhenlage des Rahmenelementes (15), wobei die zwischen dem Schlegleraggregat (7) und der Rodeeinrichtung (8) angeordnete Tastradanordnung (10) sowohl zur Steuerung der Rodetiefe, als auch zur Steuerung der Höhenlage des Schlegleraggregats (7) in Bezug auf das Niveau des Bodens (14) dient und sich das Schlegleraggregat (7) zur Steuerung seiner Höhenlage auf der Tastradanordnung (10) über wenigstens eine Abstützeinrichtung (29, 30, 31) abstützt, **gekennzeichnet durch** wenigstens ein Feder- und/oder Betätigungselement (32), welches zur zumindest teilweise Entlastung der Tastradanordnung (10) vom Gewicht des Schlegleraggregats (7) zwischen dem Rahmenelement (15) und dem Schlegleraggregat (7) oder zwischen dem Rahmenelement (15) und wenigstens einem das Schlegleraggregat (7) mit dem Rahmenelement (15) gelenkig verbindenden Lenker (16) wirkt.

2. Rodeaggregat nach Anspruch 1, **dadurch gekennzeichnet, dass** das die Tastradanordnung (10) vom Gewicht des Schlegleraggregats (7) entlastende Federelement von wenigstens einem zwischen dem Rahmenelement (15) des Rodeaggregates und dem Schlegleraggregat (7) wirkenden Hydraulik-Zylinder (32) gebildet ist.

3. Rodeaggregat nach Anspruch 1 oder 2, **dadurch gekennzeichnet, dass** über die Tastradanordnung (10) die Steuerung der Rodetiefe und/oder der Höhenlage des Schlegleraggregats (7) durch Regelung in einem geschlossenen Regelkreis, vorzugsweise in einem hydraulischen Regelkreis erfolgt.

4. Rodeaggregat nach einem der vorhergehenden Ansprüche, **dadurch gekennzeichnet, dass** die Abstützeinrichtung zur Änderung der Höhenlage des Schlegleraggregats (7) ein verstellbares Abstützelement vorzugsweise in Form eines Hydraulikzylinders (29) aufweist.

5. Rodeaggregat nach einem der vorhergehenden Ansprüche, **gekennzeichnet durch** wenigstens ein hydraulisches Ventilelement (27), welches zur Steuerung der Rodetiefe über wenigstens eine Stelleinrichtung (23, 24, 26) in Abhängigkeit von der Änderung des Abstandes zwischen der Tastradanordnung (10) oder einer Achse des wenigstens einen Tastrades (12) und dem die Rodeelemente (9) aufweisenden Rahmenelement (15) und/oder einem Bezugspunkt am Schlegleraggregat (7) betätigt wird.

6. Rodeaggregat nach einem der vorhergehenden Ansprüche, **dadurch gekennzeichnet, dass** die zu steuernde Rodetiefe und/oder Höhenlage des Schlegleraggregats (7) an der Stelleinrichtung (23, 24, 26) einstellbar ist, wobei die Stelleinrichtung (23, 24, 26) beispielsweise ein verstellbares Element, vorzugsweise einen in seiner wirksamen Länge verstellbaren, beispielsweise von einem Hydraulikzylinder (23) gebildeten Stößel aufweist.

7. Rodeaggregat nach Anspruch 5 oder 6, **dadurch gekennzeichnet, dass** die Stelleinrichtung (23, 24, 26) von einem mit der Tastradanordnung (10) oder mit einem Lager (20) dieser Anordnung an einem Ende gelenkig verbundenen Stößel- oder Abstützelement (23) und von einem mit dem anderen Ende des Stößel- oder Abstützelementes (23) gelenkig verbundenen Schwenkhebel (24) gebildet ist, der an dem die Rodeeinrichtung tragenden Rahmenelement (15) oder an dem Schlegleraggregat (7) gegen die Wirkung einer Feder (26) schwenkbar vorgesehen ist.

8. Rodeaggregat nach einem der Ansprüche 5 - 7, **dadurch gekennzeichnet, dass** die Tastradanordnung (10) für einen Bewegungs- oder Steuerhub in vertikaler Richtung (D) an dem Rahmenelement (15) federnd abgestützt ist, und dass das wenigstens eine Ventilelement (27) in Abhängigkeit von diesem Steuerhub betätigbar ist.

9. Rodeaggregat nach Anspruch 6 - 8, **dadurch gekennzeichnet, dass** der in seiner Länge einstellbare Stößel (23), der Schwenkhebel (24) sowie die mit dem Hebel zusammenwirkende Feder (26) die gefederte Abstützung für die Tastradanordnung (10) bilden.

10. Rodeaggregat nach einem der vorhergehenden Ansprüche, **dadurch gekennzeichnet, dass** die Tastradanordnung (10) in einer radialen Achsrichtung, die eine horizontale und vertikale Komponente enthält, beweglich gelagert ist

11. Erntemaschine, insbesondere selbstfahrende Erntemaschine zum Ernten bzw. Roden von Wurzelfrüchten, insbesondere Zuckerrüben, **gekennzeichnet durch** ein Rodeaggregat nach einem der vorhergehenden Ansprüche.

## Claims

1. Lifting assembly for harvesting machines, more particularly for self-propelled harvesters or complete harvesters for lifting root crops, more particularly sugar beet (3) with a beater assembly (7), with a lifting unit (8) having lifting elements (9) on a frame element (15) of the lifting assembly as well as with a feeler arrangement (10) with at least one feeler wheel (12) supported on the ground during lifting to control the lifting depth by changing the vertical position of the frame element (15) wherein the feeler arrangement (10) mounted between the beater assembly (7) and the lifting unit (8) serves both to control the lifting depth and to control the vertical position of the beater assembly (7) in relation to the level of the ground (14) and the beater assembly (7) for the control of its vertical position is supported on the feeler arrangement (10) by way of at least one support unit (29, 30, 31), **characterised by** at least one spring and/or actuating element (32) which acts for relieving the feeler arrangement (10) at least partially of the weight of the beater assembly (7) between the frame element (15) and the beater assembly (7) or between the frame element (15) and at least one guide rod (16) which connects the beater assembly (7) with articulated movement to the frame element (15).

2. Lifting assembly according to claim 1 **characterised in that** the spring element which relieves the feeler arrangement (10) of the weight of the beater assembly (7) is formed by at least one hydraulic cylinder which acts between the frame element (15) of the lifting assembly and the beater assembly (7).

3. Lifting assembly according to claim 1 or 2 **characterised in that** the control of the lifting depth and/or of the vertical position of the beater assembly (7) takes place by way of the feeler arrangement (10) through regulation in a closed regulating circuit, preferably in a hydraulic regulating circuit.

4. Lifting assembly according to one of the preceding claims **characterised in that** the support unit for changing the vertical position of the beater assembly (7) has a displaceable support element preferably in the form of a hydraulic cylinder (29).

5. Lifting assembly according to one of the preceding claims, **characterised by** at least one hydraulic valve element (27) which for controlling the lifting depth is actuated by way of at least one final control mechanism (23, 24, 26) in dependence on the change in the distance between the feeler arrangement (10) or an axle of the at least one feeler wheel (12) and the frame element (15) having the lifting elements (9) and/or a reference point on the beater assembly (7).

6. Lifting assembly according to one of the preceding claims **characterised in that** the lifting depth to be controlled and/or the vertical position of the beater assembly (7) can be set on the final control mechanism (23, 24, 26) whereby the final control mechanism (23, 24, 26) comprises by way of example a displaceable element, preferably a ram which is adjustable in its active length and is formed by way of example by a hydraulic cylinder (23).

7. Lifting assembly according to claim 5 or 6 **characterised in that** the final control mechanism (23, 24, 26) is formed by a ram or support element (23) which is connected for articulated movement at one end to the feeler arrangement (10) or to a bearing (20) of this arrangement and by a swivel lever (24) which is connected for articulated movement to the other end of the ram or support element (23), the swivel lever being provided on the frame element (15) supporting the lifting unit or on the beater assembly (7) for swivel movement against the action of a spring (26).

8. Lifting assembly according to one of claims 5 to 7 **characterised in that** the feeler arrangement (10) is supported resiliently on the frame element (15) for a movement or control stroke in the vertical direction (D) and that the at least one valve element (27) can be actuated in dependence on this control stroke.

9. Lifting assembly according to claims 6 to 8 **characterised in that** the length-adjustable ram (23), the swivel lever (24) as well as the spring (26) interacting with the lever form the resilient support for the feeler arrangement (10).

10. Lifting assembly according to one of the preceding claims **characterised in that** the feeler arrangement (10) is mounted movable in a radial axial direction which contains a horizontal and vertical component

11. Harvester, more particularly a self-propelled harvester for harvesting or lifting root crops, more particularly sugar beet, **characterised by** a lifting assembly according to one of the preceding claims.

## Revendications

1. Arracheuse pour des moissonneuses, en particulier pour des moissonneuses ou des récolteuses-chargeuses autotractées pour l'arrachage de racines plantes, en particulier de betteraves sucrières (3) comprenant un ensemble à fléaux (7), un dispositif d'arrachage (8) présentant des éléments d'arrachage (9) sur un élément de cadre (15) de l'arracheuse et un agencement de roue tâteuse (10) présentant au moins une roulette tâteuse (12) s'appuyant sur le sol lors de l'arrachage pour le contrôle de la profondeur d'arrachage par variation de la position en hauteur de l'élément de cadre (15), l'agencement de roue tâteuse (10) disposé entre l'ensemble à fléaux (7) et le dispositif d'arrachage (8) servant aussi bien au contrôle de la profondeur d'arrachage qu'au contrôle de la position en hauteur de l'ensemble à fléaux (7) par rapport au niveau du sol (14) et l'ensemble à fléaux (7) s'appuyant par au moins un dispositif d'appui (29, 30, 31) sur l'agencement de roue tâteuse pour le contrôle de sa position en hauteur, **caractérisée par** au moins un élément à ressort et/ou un élément d'actionnement (32), qui agit pour le délestage au moins partiel de l'agencement de roue tâteuse (10) du poids de l'ensemble à fléaux (7) entre l'élément de cadre (15) et l'ensemble à fléaux (7) ou entre l'élément de cadre (15) et au moins un guidon (16) reliant de façon articulée l'ensemble à fléaux (7) à l'élément de cadre ((15).

2. Arracheuse selon la revendication 1, **caractérisée en ce que** l'élément à ressort soulageant l'agencement de roue tâteuse (10) du poids de l'ensemble à fléaux (7) est formé par au moins un vérin hydraulique (32) agissant entre l'élément de cadre (15) de l'arracheuse et l'ensemble à fléaux (7).

3. Arracheuse selon la revendication 1 ou 2, **caractérisée en ce que** le contrôle de la profondeur d'arrachage et/ou de la position en hauteur de l'ensemble à fléaux (7) s'effectue via l'agencement de roue tâteuse (10) par réglage dans un circuit régulateur fermé, de préférence, dans un circuit régulateur hydraulique.

4. Arracheuse selon l'une quelconque des revendications précédentes, **caractérisée en ce que** le dispositif d'appui présente pour la variation de la position en hauteur de l'ensemble à fléaux (7) un élément d'appui réglable, de préférence sous la forme d'un vérin hydraulique (9).

5. Arracheuse selon l'une quelconque des revendications précédentes, **caractérisée par** au moins un élément de vanne (27) hydraulique, lequel est actionné pour le contrôle de la profondeur d'arrachage par un dispositif de réglage (23, 24, 26) au nombre minimum de un en fonction de la variation de la distance entre l'agencement de roue tâteuse (10) ou un axe de la roue tâteuse (12) au nombre minimum de un et l'élément de cadre (15) présentant les éléments d'arrachage (9) et/ou un point de référence sur l'ensemble à fléaux (7).

6. Arracheuse selon l'une quelconque des revendications précédentes, **caractérisée en ce que** la profondeur d'arrachage et/ou la position en hauteur à contrôler de l'ensemble à fléaux (7) est réglable sur le dispositif de réglage (23, 24, 26), le dispositif de réglage (23, 24, 26) présentant par exemple un élément réglable, de préférence un coulisseau ajustable dans sa longueur efficace, formé par exemple par un vérin hydraulique (23).

7. Arracheuse selon la revendication 5 ou 6, **caractérisée en ce que** le dispositif de réglage (23, 24, 26) est formé par un élément de coulisseau ou d'appui (23) relié de façon articulée par une extrémité à l'agencement de roue tâteuse (10) ou un palier (20) de cet agencement et par un levier pivotant (24) relié de façon articulée à l'autre extrémité de l'élément de coulisseau ou d'appui (23), lequel levier est prévu sur l'élément de cadre (15) portant l'arracheuse ou sur l'ensemble à fléaux (7) de façon à pouvoir pivoter contre l'effet d'un ressort (26).

8. Arracheuse selon l'une quelconque des revendications 5 à 7, **caractérisée en ce que** l'agencement de roue tâteuse (10) est soutenu de façon élastique sur l'élément de cadre (15) pour une course de déplacement ou de commande dans la direction (D) verticale, et **en ce qu'**un élément de vanne (27) au nombre minimum de un peut être actionné en fonction de cette course de commande.

9. Arracheuse selon les revendications 6 à 8, **caractérisée en ce que** le coulisseau (23) réglable dans sa longueur, le levier pivotant (24) et le ressort (26) coopérant avec le levier forment l'appui élastique pour l'agencement de roue tâteuse (10).

10. Arracheuse selon l'une quelconque des revendications précédentes, **caractérisée en ce que** l'agencement de roue tâteuse (10) est logé de façon mobile dans une direction d'axe radiale, qui contient une composante horizontale et une composante verticale.

11. Moissonneuse, en particulier moissonneuse autotractée, pour la récolte et l'arrachage de racines plantes, en particulier des betteraves sucrières, **caractérisée par** une arracheuse selon l'une quelconque des revendications précédentes.
